# EUROPÄISCHE PATENTSCHRIFT

(11) **EP 4 274 982 B1**
(45) Veröffentlichungstag und Bekanntmachung des Hinweises auf die Patenterteilung: **12.03.2025**
(21) Anmeldenummer: 22703912.0
(22) Anmeldetag: 28.01.2022
(51) Int. Cl.: F16L 55/165, G01D 5/24, F16L 55/18, F16L 55/30, F16L 101/30

(54) **MOBILE BESTRAHLUNGSPLATTFORM FÜR HOHLKÖRPERLAMINATE UND VERFAHREN ZUM AUSHÄRTEN EINES HOHLKÖRPERLAMINATS**
MOBILE IRRADIATION PLATFORM FOR HOLLOW-BODY LAMINATES AND METHOD FOR CURING A HOLLOW-BODY LAMINATE
PLATE-FORME D'IRRADIATION MOBILE POUR DES STRATIFIÉS À CORPS CREUX ET PROCÉDÉ PERMETTANT DE DURCIR UN STRATIFIÉ À CORPS CREUX

(30) Priorität: 05.02.2021 DE 102021201107
(43) Veröffentlichungstag der Anmeldung: 15.11.2023
(73) Patentinhaber: NETZSCH Process Intelligence GmbH, 95100 Selb (DE); Prokasro Mechatronik GmbH, 76187 Karlsruhe (DE)
(72) Erfinder: CHALOUPKA, Alexander, 86980 Ingenried (DE); ZIER, Marco, 95686 Fichtelberg (DE); RÖDER, Hannes, 95111 Rehau (DE); HABERKORN, Yvan, 15000 Prag (CZ)
(74) Vertreter: Isarpatent
(86) Internationale Anmeldenummer: PCT/EP2022/052047
(87) Internationale Veröffentlichungsnummer: WO 2022/167336

(56) Entgegenhaltungen:
- KR-B1- 101 400 380
- US-A1- 2005 104 600
- US-A1- 2019 016 021

## Beschreibung

### TECHNISCHES GEBIET DER ERFINDUNG

Die Erfindung betrifft eine mit Strahlungsenergiequellen bestückte mobile Plattform, welche in das Innere eines flexiblen Hohlkörpers zum Aushärten eines Laminats der Hohlkörperwand eingebracht werden kann. Zudem betrifft die Erfindung ein Verfahren zum Aushärten eines eine Hohlkörperwand bildenden Laminats durch Strahlungsenergieeintrag von einer mobilen Bestrahlungsplattform.

### TECHNISCHER HINTERGRUND

Leitungssysteme, also aus aneinander angrenzenden Hohlkörpern bestehende Netzwerke wie etwa Rohrleitungssysteme, Kanalsysteme oder Schachtsysteme, müssen bei Defekten, Brüchen oder Löchern in den Leitungswänden instandgesetzt werden. Gerade bei schwer zugänglichen Leitungssystemen wie beispielsweise unterirdisch verlegten Systemen ist diese Instandsetzung häufig schwierig, zumal der Erfolg der Instandsetzung möglichst dauerhaft und zuverlässig gewährleistet sein sollte.

In Abwasserkanälen beispielsweise ist eine intensive Qualitätssicherung notwendig, um sich sicher zu sein, dass der Sollzustand eines Abschnitts oder einer Komponente des instandgesetzten Kanalsystems mindestens den Anforderungen an eine neu hergestellte Kanalisation genügt. Zur Sanierung von Kanalisationssystemen können neben erneuernden Verfahren in offener oder grabenloser Bauweise auch Renovierungsverfahren, sogenannte Lining-Verfahren, eingesetzt werden. Solche Verfahren haben den Vorteil, dass sie idealerweise vollständig ohne Oberflächenaufbruch und Eingriffe in den Untergrund durchgeführt werden können. Mit Lining-Verfahren können zudem komplette Leitungsabschnitte nicht nur punktuell, sondern in einem Vorgang entlang der gesamten Länge instandgesetzt werden. Lining-Verfahren verwenden sogenannte Inliner - Auskleidungslaminate, die von innen in den bestehenden Leitungsabschnitt eingebracht werden und nach Installation eine neue Innenwand für den bestehenden Kanalabschnitt bilden.

Je nach Art, Aufbau und Einbringung in das Kanalisationssystem wird eine Feinunterteilung der Lining-Verfahren getroffen: Rohrstranglining, Wickelrohrlining, Rohrsegmentlining, Close-Fit-Lining und Schlauchlining. Beim Schlauchlining als einem der derzeit relevantesten Verfahren wird ein flexibler Schlauch aus einem Trägermaterial mit einem Reaktionsharz getränkt. Der flexible Schlauch - auch als Schlauchliner bezeichnet - wird in flexiblem Zustand in den instandzusetzenden Leitungsabschnitt eingebracht, wo er durch pneumatische oder hydraulische Verfahren formschlüssig an die Innenwand der bestehenden Leitung angepresst wird. Das Reaktionsharz kann unter lokalem Energieeintrag aushärten, so dass der Schlauchliner nach dem Aushärten ein muffenloses und durch das Trägermaterial verstärktes Kunststoffrohr als neue Innenauskleidung des bestehenden (defekten) Rohres bildet.

Übliche Schlauchliner haben meist einen mehrschichtigen Wandaufbau, der als Laminat verschiedener Schichten gebildet werden kann. Neben einer (optionalen) Innenfolie aus gegebenenfalls mit Styrol verstärktem hochdichtem Polyethylen oder Polyurethan sowie einer oder mehreren Außenfolien mit oder ohne Styrolbarriere und mit oder ohne Gewebeverstärkung ist die mittlere Schicht des Laminats der eigentliche unter Energieeintrag vernetzende, die Rohrwand bildende Verbundschicht. Als Verbund wird meist eine Kombination aus einem aushärtbaren Harzsystem und einem Trägermaterial verwendet. In Abhängigkeit von dem verwendeten Härtungssystem, der Einbaumethode und den Trägerwerkstoffen können gegebenenfalls weitere Bestandteile in den Verbund eingebracht werden, beispielsweise organische oder anorganische Füllstoffe, Korrosionsinhibitoren, Verstärkungsmaterialien und/oder Initiatoren, die bei Energieeintrag in den Schlauchliner reaktive Spezies bilden, um eine Aushärtekettenreaktion (beispielsweise radikalische oder kationische Polymerisation) des Harzsystems zu initiieren.

Die Druckschrift DE 10 2015 122 313 A1 offenbart Verfahren zum Sanieren von Leitungen, bei denen eine Aushärtevorrichtung zum Aushärten einer aushärtbaren Lage eines Auskleidungsschlauchs in einer Leitung in Abhängigkeit von einer an der Außenseite der aushärtbaren Lage gemessenen Temperatur gesteuert wird. Die Druckschrift DE 10 2016 124 116 A1 offenbart eine Vorrichtung zur Aushärtung von harzgetränkten Auskleidungsschläuchen mit energiereicher Strahlung, bei der eine tatsächlich aufgenommene Leistung einer UV-Strahlungsquelle gemessen und über eine Leistungskorrektur innerhalb eines Soll-Korridors gehalten wird.

Nach wie vor ist es problematisch bei Schlauchliningverfahren während des Aushärtevorgangs mit ausreichender Sicherheit festzustellen, wie weit die Aushärtung fortgeschritten ist. Aus Gründen der Prozesssicherheit und Qualitätsanforderungen ist eine möglichst lange Bestrahlungsdauer und -intensität auch über die tatsächlich notwendige Bestrahlungsdauer hinaus zu bevorzugen. Dem gegenüber stehen wirtschaftliche Erwägungen wie der Wunsch nach möglichst geringen Verfahrenskosten durch einen verringerten Energiebedarf für die Bestrahlung und effizienten Personaleinsatz. Eine möglichst kurze Prozessdauer für die Fertigstellung der Sanierungsarbeiten ist wegen eventuell auftretender, dem Sanierungserfolg abträglicher Wetterbedingungen wie etwa ergiebigen Regens oder Tauwetters ebenfalls von Vorteil.

Die Druckschrift US 2019/016021 A1 offenbart eine Vorrichtung zum Aushärten von harzimprägnierten Schlauchlinern mittels energiereicher Strahlung, die von mindestens zwei Strahlungsquellen erzeugt wird.

Die Druckschrift US 2005/104600 A1 offenbart ein Fahrzeug zur Inspektion eines Rohrs, einschließlich eines Fahrgestells; Antriebsmittel zum Antrieb des Fahrgestells entlang des Rohrs; und Sensormittel, die, wenn sie neben einer Innenfläche des Rohrs angeordnet sind, ein Signal liefern, das das Vorhandensein von seitlichen Öffnungen im Rohr anzeigt; wobei die Sensormittel einen kapazitiven Sensor umfassen.

Die Druckschrift KR 10-1400380 B1 offenbart einen UV-Lichtgenerator mit einer drehbaren UV-Lampe für umgekehrte UV-Härtung bei Rohrreparaturen, um eine lichthärtbare Auskleidung auszuhärten.

### ZUSAMMENFASSUNG DER ERFINDUNG

Eine der Aufgaben der Erfindung besteht daher darin, Lösungen für effizientere und zuverlässigere Schlauchliningverfahren mit einer Vor-Ort-Aushärtung der eingesetzten Schlauchliner zu finden.

Diese und andere Aufgaben werden durch eine mobile Bestrahlungsplattform mit den Merkmalen des Anspruchs 1, ein Kanalsanierungssystem mit den Merkmalen des Anspruch 8, sowie durch ein Verfahren mit den Merkmalen des Anspruchs 9 gelöst.

Gemäß einem ersten Aspekt der Erfindung umfasst eine mobile Bestrahlungsplattform, insbesondere zur Verwendung in Schlauchliningverfahren für eine Kanal- oder Schachtsanierung, ein Chassis, ein oder mehrere Bestrahlungseinrichtungen, welche in dem Chassis eingebaut sind, zur Abgabe von Strahlungsenergie eingerichtet sind und eine Abstrahlungsrichtung radial zu einer Längserstreckung der Bestrahlungsplattform aufweisen, eine Vielzahl von Stabilisationsauslegern, welche an das Chassis angelenkt und dazu ausgelegt sind, das Chassis mittig im Inneren eines Hohlkörpers abzustützen, sowie mindestens einen dielektrischen Sensor, welcher an einem chassisfernen Ende eines der Vielzahl von Stabilisationsauslegern angebracht und dazu ausgelegt ist, Veränderungen in dielektrischen Eigenschaften in der Umgebung des Stabilisationsauslegers zu erfassen.

Ein zweiter Aspekt der Erfindung umfasst ein Kanalsanierungssystem einen Schlauchliner, dessen Wand durch ein Hohlkörperlaminat mit einer UV-aushärtenden Verbundschicht gebildet wird und mindestens eine mobile Bestrahlungsplattform gemäß dem ersten Aspekt der Erfindung, welche UV-Lichtquellen als Bestrahlungseinrichtungen aufweist und dazu ausgelegt ist, die Verbundschicht des Hohlkörperlaminats des Schlauchliners von innen heraus zu einem eine Innenverkleidung eines zu sanierenden Kanals bildenden Hohlkörper auszuhärten.

Ein dritter Aspekt der Erfindung umfasst ein Verfahren zum Aushärten eines Hohlkörperlaminats, insbesondere für den Einsatz in Schlauchliningverfahren zur Kanal- oder Schachtsanierung, die Schritte des Einbringens einer mobilen Bestrahlungsplattform in das Innere eines Hohlkörperlaminats mit einer unter Strahlungsenergie aushärtenden Verbundschicht, des Abstützens der mobilen Bestrahlungsplattform an der Innenwand des Hohlkörperlaminats über an einem Chassis der Bestrahlungsplattform angelenkten Stabilisierungsausleger, des Bestrahlens des Hohlkörperlaminats mit Strahlungsenergie von in dem Chassis eingebauten Bestrahlungseinrichtungen - wie beispielsweise UV-Lichtquellen -, und des Erfassens von Veränderungen in dielektrischen Eigenschaften des Hohlkörperlaminats in der Umgebung des Stabilisationsauslegers mittels eines an einem chassisfernen Ende eines der Stabilisationsausleger angebrachten dielektrischen Sensors.

Eine der wesentlichen Ideen der Erfindung besteht darin, den Fortschritt eines Aushärtevorgangs bei einem Bestrahlen des auszuhärtenden Hohlkörperlaminats durch eine mobile Plattform vor Ort durch mit der mobilen Plattform mitgeführte Sensorik in Echtzeit zu überwachen. Dazu eignet sich die dielektrische Analyse, bei der mittels dielektrischer Sensoren dielektrische Eigenschaften des Hohlkörperlaminats und deren Änderungen während eines Aushärtens kontaktlos vermessen werden können. Die dielektrischen Sensoren sind dazu nah an der auszubildenden Hohlkörperwand angebracht und können aufgrund der synchronen Vorschubbewegung mit den Bestrahlungseinrichtungen Messparameter liefern, die direkten und unmittelbaren Aufschluss über die Wirkung der Bestrahlung bieten.

Vorteilhafte Ausgestaltungen und Weiterbildungen ergeben sich aus den weiteren Unteransprüchen sowie aus der Beschreibung unter Bezugnahme auf die Figuren.

Gemäß einigen Ausführungsformen kann eine mobile Bestrahlungsplattform weiterhin ein Prozesssteuergerät, welches in dem Chassis eingebaut ist, aufweisen. Dieses Prozesssteuergerät kann in manchen Ausführungsformen dazu ausgelegt sein, Betriebsparameter der Bestrahlungsplattform, wie beispielsweise Vorschubgeschwindigkeit im Inneren eines Hohlkörperlaminats oder Bestrahlungsstärke der Bestrahlungseinrichtungen, in Abhängigkeit von durch den dielektrischen Sensor erfassten dielektrischen Eigenschaften in der Umgebung des Stabilisationsauslegers dynamisch anzupassen. Dies ermöglicht vorteilhafterweise eine Adaption eines Liningverfahrens an vorherrschende Umweltbedingungen, mittels derer ein Bestrahlungsprozedere durch eine mobile Bestrahlungsplattform effizienter und zeitsparender, aber ohne Abstriche bei der Zuverlässigkeit und Produktqualität durchgeführt werden kann.

Gemäß einigen weiteren Ausführungsformen kann eine mobile Bestrahlungsplattform weiterhin ein Plattformsteuergerät aufweisen, welches in dem Chassis eingebaut. Das Plattformsteuergerät kann in manchen Ausführungsformen dazu ausgelegt sein, durch den dielektrischen Sensor erfasste Messdaten zu sammeln und auszuwerten. Besonders bei mehreren dielektrischen Sensoren kann es vorteilhaft sein, Messdaten zentral in der mobilen Plattform zu sammeln und eine synchronisierte und/oder räumlich aufgelöste Datenauswertung zu ermöglichen. Dies erlaubt weitere Einblicke in den Fortschritt von Aushärtungsvorgängen, besonders bei der Verwendung von Plattformzügen aus mehreren hintereinander eingesetzten mobilen Bestrahlungsplattformen.

Gemäß einigen weiteren Ausführungsformen kann eine mobile Bestrahlungsplattform weiterhin eine Datenschnittstelle aufweisen, welcher mit dem Plattformsteuergerät gekoppelt ist. Die Datenschnittstelle kann es ermöglichen, durch das Plattformsteuergerät gesammelte Messdaten des dielektrischen Sensors an eine plattformexterne Einrichtung zu übermitteln, beispielsweise an einen externen Arbeitsrechner eines Kanalsanierungssystems. Dies hat den Vorteil, dass Nutzer der mobilen Bestrahlungsplattform eine bessere und komfortablere Echtzeitüberwachung nutzen und bei Abweichungen von der Norm entsprechende Korrekturen des Bestrahlungsvorgangs manuell vornehmen oder auftretende Fehler schneller vor Ort beseitigen können. Die Datenschnittstelle kann in einigen Ausführungsformen ein Drahtloskommunikationsmodul aufweisen, wodurch eine kabellose Anbindung der mobilen Bestrahlungsplattform an externe Einrichtungen gewährleistet werden kann.

Gemäß einigen weiteren Ausführungsformen kann eine mobile Bestrahlungsplattform weiterhin Rollen aufweisen, welche an den chassisfernen Enden der Vielzahl von Stabilisationsauslegern angebracht sind. Dies bietet den Vorteil, dass ein Vorschub der mobilen Bestrahlungsplattform im Inneren eines Hohlkörperlaminats einfach, energieeffizient und ohne Beschädigung des Laminats erfolgen kann.

Gemäß einigen Ausführungsformen des Verfahrens kann das Verfahren weiterhin den Schritt des dynamischen Anpassens von Betriebsparametern der Bestrahlungsplattform in Abhängigkeit von durch den dielektrischen Sensor erfassten Veränderungen in dielektrischen Eigenschaften des Hohlkörperlaminats in der Umgebung des Stabilisationsauslegers aufweisen. Hierbei können zum Beispiel Vorschubgeschwindigkeit der mobilen Plattform, Bestrahlungsstärke der Bestrahlungseinrichtungen oder andere für die Bestrahlung relevante Parameter der Bestrahlungsplattform eingestellt werden, um in vorteilhafter Weise eine Erhöhung der Bestrahlungseffizienz und eine Verringerung der für die Aushärtung des Hohlkörperlaminats benötigten Zeit zu erreichen, gleichzeitig aber keine Abstriche bei der Qualität und Zuverlässigkeit des Aushärteprozesses zur Erzeugung eines hochwertigen Hohlkörpers machen zu müssen.

Gemäß einigen weiteren Ausführungsformen des Verfahrens kann das Verfahren weiterhin den Schritt des drahtlosen Übermittelns von durch den dielektrischen Sensor erfassten Messdaten über eine Datenschnittstelle der mobilen Bestrahlungsplattform an eine externe Einrichtung außerhalb des Inneren des Hohlkörperlaminats aufweisen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 eine perspektivische Beispielansicht einer mobilen Plattform mit Bestrahlungseinrichtungen gemäß einer Ausführungsform der Erfindung;
Fig. 2 ein schematisches Blockschaubild einer mobilen Plattform mit Bestrahlungseinrichtungen im Einsatz im Inneren eines Hohlkörperlaminats gemäß einer weiteren Ausführungsform der Erfindung;
Fig. 3 ein schematisches Blockschaubild einer Schaltung für einen dielektrischen Sensor zur Verwendung in einer mobilen Plattform nach Fig. 1 oder 2 gemäß einer weiteren Ausführungsform der Erfindung; und
Fig. 4 ein Flussdiagramm eines Verfahrens zum Aushärten eines Hohlkörperlaminats gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

Hohlkörperlaminate im Sinne der vorliegenden Erfindung umfassen zu einer zumindest einseitig offenen umlaufenden Mantelfläche geformte Schichtsysteme, die die Hohlkörperwand eines länglichen, ein Lumen umschließenden Hohlkörpers bilden. Hohlkörperlaminate können beispielsweise in Form eines Hohlzylinders, eines Hohlbalkens oder eines Rohrs gebildet werden. Insbesondere können Hohlkörperlaminate durch die Wahl der Materialien der Schichtsysteme in ihrer Ausgangsform zumindest teilweise flexibel sein, das heißt einen Schlauch mit zumindest teilweise biegsamen Schlauchwänden bilden. Das Querschnittsprofil des durch ein Hohlkörperlaminat gebildeten Hohlkörpers kann jede beliebe Form annehmen, insbesondere ein kreisrundes Profil, ein ovales Profil, ein elliptisches Profil oder ein konvex polygonales Profil mit abgerundeten Ecken. Das Querschnittsprofil des durch ein Hohlkörperlaminat gebildeten Hohlkörpers kann entlang der Längserstreckung des Hohlkörpers auch variabel sein, beispielsweise im Durchschnitt größer oder kleiner werden oder Stufen wechselnden Querschnitts aufweisen. Insbesondere kann das Querschnittsprofil des durch ein Hohlkörperlaminat gebildeten Hohlkörpers durch das Querschnittsprofil einer bestehenden auszukleidenden Leitung, in die das Hohlkörperlaminat eingebracht wird, definiert werden.

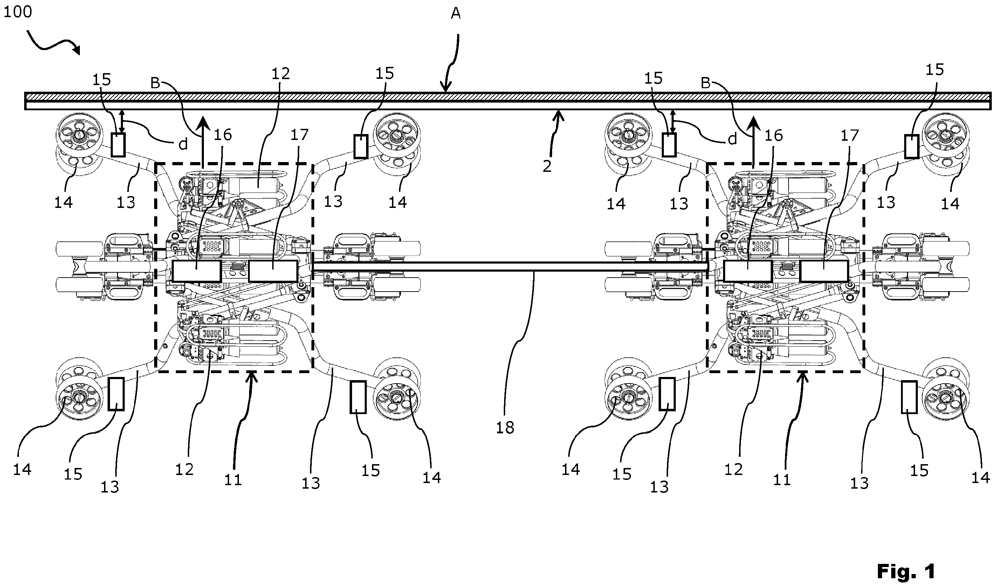

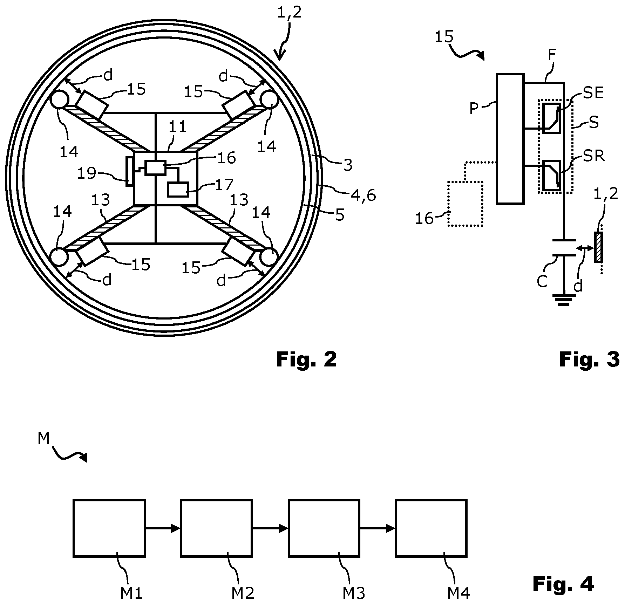

Fig. 1 zeigt eine perspektivische Beispielansicht einer mobilen Plattform 100 mit Bestrahlungseinrichtungen 12. Eine entsprechende schematische Blockschaubildansicht einer solchen mobilen Plattform 100 im Betrieb im Inneren eines Hohlkörperlaminats 2 ist in Fig. 2 dargestellt. Mobile Plattformen 100 im Sinne der vorliegenden Erfindung, die mit einer oder mehreren Bestrahlungseinrichtungen ausgestattet sind, können auch als mobile Bestrahlungsplattformen bezeichnet werden.

Wie in Fig. 2 beispielhaft illustriert können Hohlkörperlaminate 2, wie beispielsweise Schlauchliner für den Einsatz in Schlauchliningverfahren bei der Kanal- oder Schachtsanierung unterirdischer Kanalisationssysteme A, einen mehrschichtigen Wandaufbau aufweisen, die unter Bestrahlung mit Energieeintrag zu einem Hohlkörper 1 aushärten. Der dadurch gebildete Hohlkörper 1 stellt nach dem Aushärten ein muffenloses, verstärktes Kunststoffrohr als neue Innenauskleidung eines bestehenden Abschnitts eines Leitungssystems, wie beispielsweise eines unterirdischen Kanalisationssystems A, dar. Die Dicke der Wand des dadurch gebildeten Hohlkörpers 1 kann in manchen Varianten etwa zwischen 2 mm und 15 mm betragen, die Nennweite etwa zwischen 100 mm und 600 mm.

An der Innenseite der Hohlkörperwand des Hohlkörperlaminats 2 kann eine optionale Innenfolie 5 angebracht werden. Die Innenfolie 5 kann beispielsweise aus hochdichtem Polyethylen oder Polyurethan gebildet werden und optional mit Styrol beschichtet sein. Die Innenfolie 5 dient dazu, beim Aushärten des Laminats einen Kontakt mit Prozesswasser oder Wasserdampf zu vermeiden. Nach dem Abschluss des Schlauchlinings kann die Innenfolie 5 als Rohrinnenwand in dem Hohlkörper 1 verbleiben. Alternativ dazu kann die Innenfolie 5 nach dem Aushärtevorgang auch entfernt werden.

Zwischen einer Außenfolie 4 und der Innenfolie 5 ist ein Verbundmaterial 3 als Sandwichschicht eingebettet. Die Verbundschicht 3 bildet die zentrale Schicht des Hohlkörperlaminats 2. Die Verbundschicht 3 kann eine Kombination aus einem aushärtbaren Harzsystem und einem Trägermaterial aufweisen. Das Harzsystem kann beispielsweise ein ungesättigtes Polyesterharz, ein Vinylesterharz, ein Silikatharz oder ein Epoxidharz aufweisen. Das Trägermaterial kann beispielsweise korrosionsbeständige Synthese- oder Polymerfasern aufweisen, wie etwa Polyamid, Acrylnitril-Polymerisat, Polyethylenterephthalat oder Polypropylen. Dabei können großflächige Nadelfilzbahnen mit Stumpfstoß oder Überlapp zu Schlauchlinern zusammengefügt werden. Alternativ dazu kann es möglich sein, korrosionsbeständige Glasfasern in einem Glasfasergelege oder -gewebe einzusetzen, wie etwa E-CR-Glas (Aluminiumkalksilikatglas) mit verstärkenden Glasfasern. Dabei können Glaswirrfasern oder Gewebe/Gelege aus Glasfasern zur Festigkeits- und Versteifungserhöhung überlappend lagenversetzt zu einem Schlauchliner zusammengefügt werden. Es kann auch möglich sein, Mischsysteme aus Synthesefasern und Glasfasern zu verwenden, sogenannte Sandwichsysteme, um zonen- oder abschnittsweise Festigkeit und Steifigkeit des Schlauchliners gezielt einstellen zu können.

Zusätzlich zu Harzsystem und Trägermaterial können optional weitere Bestandteile in die Verbundschicht 3 eingebracht werden, beispielsweise organische oder anorganische Füllstoffe, Korrosionsinhibitoren und/oder Verstärkungsmaterialien. Das Trägermaterial wird mit dem verwendeten Harzsystem imprägniert, je nach Harzsystem gekühlt und/oder opak verpackt und erst vor Ort bei der Kanalsanierung zur Aktivierung des Harzsystems freigesetzt. Die Aushärtung des Harzsystems kann durch unterschiedliche Initiatoren erfolgen, die bei Energieeintrag in den Schlauchliner reaktive Spezies bilden. Als Aushärtungsverfahren kommen thermische und lichtinduzierte Initiation in Frage. Dazu können Bestrahlungsenergiequellen eingesetzt werden, die beispielsweise Infrarotstrahlung und/oder UV-Strahlung steuerbar und lokal in die Verbundschicht 3 eintragen. Bei einer thermischen Aushärtung setzt Wärme von beispielsweise 70°C bis 100°C eine Aushärtekettenreaktion in Gang, infolge derer eine - je nach verwendetem thermischen Initiator - radikalische oder kationische Polymerisation erfolgt, die in einer vollständigen Aushärtung der Verbundschicht 3 und damit auch des Hohlkörperlaminats 2 resultiert. Ähnlich kann ein Eintrag von UV-Strahlungsenergie bei in der Verbundschicht 3 eingebetteten Photoinitiatoren zu einer radikalischen oder kationischen Polymerisation und darauffolgenden Aushärtung des Hohlkörperlaminats 2 führen. Übliche Aushärtedauern betragen etliche Minuten, wie etwa 2 bis 15 Minuten, insbesondere etwa 4 bis 10 Minuten.

An der Außenseite der Hohlkörperwand des Hohlkörperlaminats 2 kann eine Außenfolie 4 angebracht werden. Die Außenfolie 4 kann ebenfalls beispielsweise aus hochdichtem Polyethylen oder Polyurethan gebildet werden und optional über eine Gewebeverstärkung verfügen. Die Außenfolie 4 dient dazu, ein Austreten überschüssigen Verbundmaterials 3 aus dem Hohlkörperlaminat 2 in die Umgebung zu verhindern und gleichzeitig die Verbundschicht 3 gegenüber physikalischen und chemischen Einflüssen eventuell vorhandener Reste von in dem zu sanierenden Leitungssystem transportierten Fluiden und Feststoffen zu schützen.

Um die Außenfolie 4 kann als äußerste Schicht optional eine gewebeverstärkte Lichtschutzfolie 6 aufgebracht werden. Diese Lichtschutzfolie 6 kann insbesondere bei UV-aktivierbaren Verbundschichten 3 eine vorzeitige Aktivierung der Verbundschicht 3 durch Umgebungslicht verhindern. Dadurch werden die Lagerung, der Transport und das Einbringen in eine zu sanierende Leitung deutlich vereinfacht.

Die mobile Plattform 100 weist ein zentrales Chassis 11 auf, welches auch als Montagerahmen oder Trägergestell bezeichnet werden. In dem Chassis 11 sind ein oder mehrere Bestrahlungseinrichtungen 12 aufgenommen bzw. eingebaut, welche dazu ausgelegt sind, Strahlungsenergie B aus dem Chassis 11 heraus nach außen abzugeben. Insbesondere kann die Strahlungsenergie B von den Bestrahlungseinrichtungen 12 radial nach außen und im Wesentlichen unter senkrechtem Einfall auf das Hohlkörperlaminat 2 abgegeben werden. Die Bestrahlungseinrichtungen 12 können nach einem Einbringen der mobilen Plattform 100 in das Innere eines Hohlkörperlaminats 2, beispielsweise in das Innere eines Schlauchliners, aktiviert werden, um durch einen lokalen Energieeintrag in die Verbundschicht(en) 3 des Hohlkörperlaminats 2 eine Aushärtungsreaktion zu triggern. Je nach verwendetem Harzsystem und eventuell vorhandenem Initiatortyp in der Verbundschicht 3 können verschiedene Bestrahlungseinrichtungen 12 eingesetzt werden - Wärmestrahlungsquellen, Infrarotlampen oder auch UV-Lichtquellen wie beispielsweise UV-Laserdioden, UV-Leuchtdioden, UV-Kaltkathodenröhren, Schwarzlichtlampen oder Gasentladungslampen wie zum Beispiel Metalldampf-Hochdrucklampen oder Metalldampf-Niederdrucklampen (beispielsweise auf der Basis von Natrium, Cadmium, Quecksilber oder anderen Metallhalogeniden). Die Anzahl, Art und Kombination der Bestrahlungseinrichtungen 12 ist prinzipiell nicht begrenzt - es kann möglich sein, mehr als eine Bestrahlungseinrichtung 12 gleicher oder unterschiedlicher Bauart einzusetzen. Insbesondere kann es bei mobilen

Plattformen 100 für Schlauchliner möglich sein, mehrere Bestrahlungseinrichtungen 12 gleichmäßig um eine Axialrichtung der mobilen Plattform 100 in Richtung der Längserstreckung des Hohlkörperlaminats 2 anzuordnen, um dadurch eine radial gleichmäßige Bestrahlung des Hohlkörperlaminats 2 erzielen zu können.

In dem Chassis 11 können auch entsprechende (in Fig. 1 und 2 nicht explizit illustrierte) elektronische Schaltungen, elektrische Energiequellen und/oder Steuergeräte für den Betrieb der Bestrahlungseinrichtungen 12 untergebracht sein. Es kann auch möglich sein, dass die mobile Plattform 100 über elektrische Leitungen mit Energiequellen außerhalb des Hohlkörperlaminats 2, wie beispielsweise einen Stromgenerator oder ein elektrisches Energienetz, verbunden wird, die sich insbesondere außerhalb eines zu sanierenden Leitungssystems befinden.

An dem Chassis 11 sind Stabilisationsausleger 13 angeordnet, an deren Enden beispielsweise Räder oder Rollen 14 angebracht sind. Über die Stabilisationsausleger 13, die insbesondere gegenüber dem Chassis 11 beweglich an das Chassis 11 angelenkt sein können, kann die mobile Plattform 100 an der durch ein Hohlkörperlaminat 2 definierten Innenwand einer Leitung, eines Kanals, eines Schachts oder eines anderweitigen Hohlraums abgestützt werden. Durch die entsprechende Einstellung der Stabilisationsausleger 13 kann das zentrale Chassis 11 vorzugsweise mittig und unter Einhaltung einer kontrollierbaren Position im Inneren des Hohlkörperlaminats 2 gehalten werden. Dies ermöglicht eine über seinen Umfang gleichmäßige Bestrahlung des Hohlkörperlaminats 2 durch die Bestrahlungseinrichtungen 12.

Mithilfe der Rollen 14 kann die mobile Plattform 100 innerhalb des Inneren des Hohlkörperlaminats 2 entlang der Axialrichtung bewegt werden. Dazu kann die mobile Plattform 100 einen eigenen Antrieb aufweisen oder alternativ auch durch Krafteinwirkung von außen durch das Innere des Hohlkörperlaminats 2 geschoben oder gezogen werden. Alternativ zu den Rollen 14 können auch andere Bewegungen vermittelnde Abschlusselemente der Stabilisationsausleger 13 vorgesehen werden, wie beispielsweise reibungsarm beschichtete Gleitschuhe oder Kettenräder.

Wie in Fig. 1 beispielhaft illustriert, können mehrere mobile Plattformen 100 zu einem Plattformzug zusammengeschlossen werden. In Fig. 1 sind schematisch zwei mobile Plattformen 100 in einem Plattformzug dargestellt, mehr als zwei mobile Plattformen 100 in einem Plattformzug sind jedoch ebenfalls möglich. Die mobilen Plattformen 100 eines Plattformzuges können über Zugkabel 18 miteinander gekoppelt werden. Die Zugkabel 18 können nicht nur eine mechanische Kopplung der einzelnen mobilen Plattformen 100 vermitteln, sondern es können auch elektrische Verbindungsleitungen zur Durchleitungen von Steuersignalen oder elektrischer Energieversorgung zwischen den einzelnen mobilen Plattformen 100 vorgesehen werden.

An einem, einigen oder allen Stabilisationsauslegern 13 können dielektrische Sensoren 15 am chasissfernen (d.h. von dem Chassis 11 nach dem Ausklappen der Stabilisationsausleger 13 am weitesten entfernten) Ende angebracht sein. Beispielhaft sind in Fig. 1 und 2 jeweils vier der Stabilisationsausleger 13 der mobilen Plattform 100 als mit dielektrischen Sensoren 15 bestückt dargestellt - es sollte jedoch klar sein, dass jede andere Zahl von dielektrischen Sensoren 15 ebenfalls möglich ist. Die dielektrischen Sensoren 15 weisen ein (nicht explizit dargestelltes) Sensorgehäuse und aktive Sensorkomponenten auf, deren elektrische Verschaltung in dem beispielhaften Blockschaltbild der Fig. 3 detaillierter gezeigt sind.

Dielektrische Sensoren 15 arbeiten nach dem Prinzip der Reflexionsmessung an einem Messkondensator C und der Änderung des Reflexionsverhaltens aufgrund von Änderungen der dielektrischen Eigenschaften in der Umgebung des Messkondensators C. Die Kapazität des Messkondensators C hängt neben den geometrischen Abmessungen des Kondensators und der Dielektrizitätskonstante im Vakuum auch von der Dielektrizitätszahl in der Umgebung des Kondensators ab. Insbesondere bei plattenförmigen Kondensatoren mit in der Erstreckungsebene der Kondensatorplatten gestaffelten Elektroden erstreckt sich das elektrische Grenzfeld von den Kondensatorplatten weg in die Umgebung hinein. Bei Änderungen der dielektrischen Eigenschaften der Umgebung, die sich in einem typischen Abstand d von der aktiven Messoberfläche des dielektrischen Sensors 15 weg befinden, ändert sich auch das Reflexionsverhalten elektrischer Wechselspannung an dem Messkondensator C. Als Messkondensator C können planare Elektrodenkonfigurationen eingesetzt werden, die teilweise an einen Monotrodenaufbau angelehnt sind und sich durch große Elektrodenabstände kennzeichnen, um Änderungen in der Dielektrizitätszahl auch auf größere Distanzen zuverlässig detektieren zu können.

Durch ein Sensorsteuergerät P wird eine elektrische Wechselspannung F einer bestimmten Frequenz und Amplitude an den Messkondensator C angelegt. Die tatsächlich ausgegebene Wechselspannung wird über einen Eingangsrichtkoppler SE einer Sensorschnittstelle S gemessen und deren Frequenz und Amplitude in dem Sensorsteuergerät P bestimmt. Nach der Reflexion der elektrischen Wechselspannungswelle an dem Messkondensator C wird der rücklaufende, d.h. reflektierte Teil der Wechselspannungswelle über einen Ausgangsrichtkoppler SR der Sensorschnittstelle S ebenfalls gemessen und deren Frequenz und Amplitude in dem Sensorsteuergerät P bestimmt. Das Verhältnis zwischen einlaufender und rücklaufender Wechselspannungswelle wird durch das Sensorsteuergerät P als zeitaufgelöster Messparameter ermittelt.

Das Hohlkörperlaminat 2 weist in seinem flexiblen Ausgangszustand eine gewisse Viskosität auf. In der Verbundschicht 3 enthaltene Dipole, wie etwa endständige Gruppen von Monomeren des Harzsystems, können sich im elektrischen Feld in bestimmten Umfang ausrichten. Bei einer Temperaturerhöhung - beispielsweise bei einer Bestrahlung durch eine Bestrahlungseinrichtung 12 - nehmen lonenmobilität und Dipolausrichtungsgrad zunächst zu. Erst bei einem Einsetzen der Polymerisation durch radikalische oder kationische Vernetzung nimmt die lonenmobilität wieder ab und die Möglichkeit zur Ausrichtung von Dipolen wird stark eingeschränkt. Im voll vernetzten Zustand ist die Ionenviskosität daher stark erhöht und die Dipolausrichtung stark vermindert.

Das Sensorsteuergerät P kann beispielsweise als SDR-System ("Software Defined Radio") implementiert werden, bei dem die Hardware für die Charakterisierung der einlaufenden und rücklaufenden Wechselspannungswellen einen Verstärker, einen Downsampler und einen Analog-Digital-Wandler (ADC) aufweist. Die hochfrequenten Wechselspannungswellen, deren Frequenz beispielsweise im Bereich mehrerer hundert MHz bis zu einigen GHz betragen kann, werden auf Basisband im Bereich weniger kHz heruntergemischt und digitalisiert. Das Sensorsteuergerät P weist dann weiterhin einen Signalprozessor wie etwa einen ASIC oder einen FPGA auf, in dem über Anwendungsprogramme eine digitale Auswertung der digitalisierten Basisbandmesssignale erfolgt.

Als Messparameter kommt insbesondere der Reflexionsfaktor in Frage, der als Verhältnis zwischen rücklaufender und einlaufender Wechselspannungswelle gebildet wird. Nach Beginn des Aushärteprozesses wird der Reflexionsfaktor sinken, da durch die Erwärmung der Verbundschicht 3 eine Viskositätserniedrigung einsetzt. Danach wird es nach einem Reflexionsfaktorminimum zu einem Anstieg des Reflexionsfaktors kommen, da die Aushärtereaktion einsetzt. Ab einem bestimmten Zeitpunkt wird ein Plateaubereich erreicht werden, in dem sich der Reflexionsfaktor nicht mehr oder jedenfalls nicht mehr wesentlich ändert, da eine vollständige Aushärtung der Verbundschicht 3 abgeschlossen ist.

Über die dielektrischen Sensoren 15, die an einem laminatseitigen Ende der Stabilisationsausleger 13 angeordnet sind und demnach nur um einen geringen Messabstand d von dem Hohlkörperlaminat 2 beabstandet sind, kann daher eine zeitaufgelöste Beurteilung des Fortschreitens der Aushärtereaktion infolge der Bestrahlung durch die Bestrahlungseinrichtungen 12 erfolgen. Insbesondere kann in dem Sensorsteuergerät P ein Schwellwert der Reflexionsfaktoränderung einstellbar sein, dessen Unterschreitung eine hinreichend vollständige Aushärtung der Verbundschicht 3 und damit des Hohlkörperlaminats 2 zu einem Hohlkörper 1 kennzeichnet.

Die Messparameter der dielektrischen Sensoren 15 können dabei entweder vor Ort in den Sensoren 15 selbst, in einem in dem Chassis 11 angeordneten Plattformsteuergerät 16 oder in einem außerhalb der mobilen Plattform 100 angeordneten Messrechner, wie etwa einem Arbeits-PC eines mobilen Kanalsanierungssystems, verarbeitet und ausgewertet werden. Das Plattformsteuergerät 16 kann hierzu die Messdaten der einzelnen dielektrischen Sensoren 15 einer Plattform 100 sammeln und über eine externe Datenschnittstelle 19 nach außen aus dem Leitungssystem abgeben. Die externe Datenschnittstelle 19 kann beispielsweise kabelgebunden sein. Alternativ oder zusätzlich dazu kann es auch möglich sein, ein drahtloses Kommunikationsmodul als externe Datenschnittstelle 19 einzusetzen, über die Messdaten von dem Plattformsteuergerät 16 drahtlos, beispielsweise über eine WLAN- oder Funkverbindung, an einen externen Arbeits-PC übermittelt werden können. Insbesondere kann das Plattformsteuergerät 16 auch eine Wandlung analoger Messdaten in digitale Messsignale vornehmen, da bei einer Übertragung von digitalen Signalen die elektromagnetische Verträglichkeit und Störungsfreiheit gegenüber beispielsweise der elektrischen Energieversorgung oder der Ansteuerung der Bestrahlungseinrichtungen 12 verbessert ist.

Die mobile Plattform 100 kann ein Prozesssteuergerät 17 aufweisen, welches ebenfalls in dem Chassis 11 angeordnet und mit dem Plattformsteuergerät 16 gekoppelt ist. Das Prozesssteuergerät 17 kann beispielsweise den Vorschub der mobilen Plattform 100, die momentane Bestrahlungsstärke der Bestrahlungseinrichtungen 12 oder andere für die Bestrahlung des Hohlkörperlaminats 2 relevante Parameter in Abhängigkeit von dem durch die dielektrischen Sensoren 15 ermittelten Aushärtegrade des Hohlkörperlaminats 2 dynamisch anpassen. Beispielsweise kann es möglich sein, die Bewegungsgeschwindigkeit der mobilen Plattform 100 zu erhöhen, wenn die Aushärtung des Hohlkörperlaminats 2 schon vor einer eigentlich geplanten Weiterbewegung der mobilen Plattform lokal abgeschlossen ist. Es kann auch möglich sein, die Bestrahlungsstärke der Bestrahlungseinrichtungen 12 zu erhöhen oder zu verringern, je nach über die Messung der dielektrischen Sensoren 15 ermittelten lokalen Aushärtegeschwindigkeit. Darüber hinaus können die erfassten Messparameter der dielektrischen Sensoren 15 für eine Qualitätssicherung herangezogen werden, beispielsweise um einen Nachweis für die Erfüllung eines Standards bei der Aushärtung des Hohlkörperlaminats 2 liefern zu können.

Es kann auch möglich sein, die Auswertung der Messparameter der dielektrischen Sensoren 15 sowie die Ansteuerung der mobilen Plattform 100 komplett außerhalb des Leitungssystems vorzunehmen. Dazu können die Bewegungs- und Betriebsparameter der mobilen Plattform 100 von einem außerhalb des Hohlkörperlaminats 2 befindlichen Steuerrechner aus über entsprechende Steuersignale in Abhängigkeit von den durch die dielektrischen Sensoren 15 ermittelten Aushärtegrade des Hohlkörperlaminats 2 dynamisch eingestellt werden.

Fig. 4 zeigt ein Flussdiagramm eines Verfahrens M zum Aushärten eines Hohlkörperlaminats 2, insbesondere für die Verwendung in Sanierungsarbeiten eines Leitungssystems A. Das Verfahren M kann zum Beispiel im Rahmen eines Schlauchliningverfahrens in der Kanal- oder Schachtsanierung eingesetzt werden. Das Verfahren M kann beispielsweise unter Nutzung einer mobilen Plattform, wie beispielsweise der mobilen Plattform 100, oder eines Plattformzuges, die im Zusammenhang mit den Fig. 1, 2 und 3 dargestellt und beschrieben werden, durchgeführt werden.

Zunächst wird ein Hohlkörperlaminat mit einer strahlungsreaktiven Verbundschicht, wie etwa das im Zusammenhang mit Fig. 1 und 2 erläuterte Hohlkörperlaminat 2, für das Einbringen einer mobilen Bestrahlungsplattform 100 vorbereitet. Beispielsweise kann im Zuge eines Kanalsanierungsverfahrens ein Schlauchliner in eine zu sanierende Leitung eingebracht werden. Dies kann über ein Einziehverfahren, ein Inversionsverfahren oder eine Kombination der beiden vorstehend genannten Verfahrensarten geschehen. Im Rahmen des Einziehverfahrens wird das Hohlkörperlaminat 2 mit Hilfe von Seilwinden von außen in die zu sanierende Leitung eingezogen. Dabei können vor dem Einziehvorgang schützende Gleitfolien in der Leitungssohle installiert werden. Nach dem Einziehen kann das Hohlkörperlaminat 2 hydraulisch oder pneumatisch mit Überdruck beaufschlagt werden, um dadurch ein Lumen im Inneren des gegen die Innenwand der zu sanierenden Leitung gepressten Hohlkörperlaminats 2 zu schaffen. Beim Inversionsverfahren hingegen kann ein Anfangsstück des Hohlkörperlaminats 2 auf eine Öffnung der zu sanierenden Leitung aufgekragt werden und über hydraulischen oder pneumatischen Überdruck in die Leitung eingekrempelt werden.

Unabhängig von der Art des Einbringens wird nach dem Vorbereiten des Hohlkörperlaminats 2 in einem ersten Schritt M1 des Verfahrens M eine mobile Bestrahlungsplattform 100 oder auch ein Plattformzug aus mehreren mobilen Bestrahlungsplattformen 100 in das Lumen des Hohlkörperlaminats 2 eingeführt werden. Dies kann beispielsweise ebenfalls unter Zuhilfenahme von Seilwinden erfolgen. In einem zweiten Schritt M2 wird die mobile Bestrahlungsplattform 100 an der Innenwand des Hohlkörperlaminats 2 über an einem Chassis 11 der Bestrahlungsplattform 100 angelenkte Stabilisierungsausleger 13 abgestützt. Hierzu werden die optional mit Rollen 14 bestückten Stabilisierungsausleger 13 von dem Chassis 11 weggeklappt und mit den chassisfernen Endabschnitten in Kontakt mit der Innenwand des Hohlkörperlaminats 2 gebracht. Dadurch kann das Chassis 11 etwa mittig im Lumen des Hohlkörperlaminats 2 angeordnet und stabilisiert werden.

Nach der korrekten Positionierung der mobilen Bestrahlungsplattform(en) 100 kann in einem dritten Schritt M3 ein Bestrahlen des Hohlkörperlaminats 2 mit Strahlungsenergie von in dem Chassis 11 eingebauten Bestrahlungseinrichtungen 12 erfolgen. Beispielsweise können die Bestrahlungseinrichtungen 12 UV-Lichtquellen aufweisen, die UV-Licht in radialer Richtung der Leitung nach außen abstrahlen. Die Strahlungsenergie bewirkt das Initiieren einer lokalen Aushärtereaktion in der Verbundschicht 3 des Hohlkörperlaminats 2. In einem vierten Schritt M4 des Verfahrens M werden Veränderungen in dielektrischen Eigenschaften des Hohlkörperlaminats 2 in der Umgebung des Stabilisationsauslegers 13 erfasst. Dies erfolgt mittels eines an dem chassisfernen (d.h. von dem Chassis 11 nach dem Ausklappen der Stabilisationsausleger 13 am weitesten entfernten) Ende eines oder mehrerer der Stabilisationsausleger 13 angebrachten dielektrischen Sensors bzw. Sensoren 15. Der dielektrische Sensor 15 kann beispielsweise den im Zusammenhang mit Fig. 3 erläuterten Aufbau und entsprechend Funktionsweise haben. Durch die zeitaufgelöste lokale Vermessung der dielektrischen Eigenschaften des Hohlkörperlaminats 2 kann ermittelt werden, in welchem Stadium der Aushärtung sich das Hohlkörperlaminat 2 befindet.

Basierend auf den durch den dielektrischen Sensor 15 erfassten Veränderungen in dielektrischen Eigenschaften des Hohlkörperlaminats 2 können zudem Betriebsparameter der Bestrahlungsplattform 100, wie etwa Vorschubgeschwindigkeit oder Bestrahlungsstärke der Bestrahlungseinrichtungen 12, dynamisch an das ermittelte Aushärteverhalten angepasst werden. Die erfassten Messdaten des dielektrischen Sensors 15 bzw. der mehreren Sensoren 15 können an eine externe Einrichtung außerhalb des Inneren des Hohlkörperlaminats 2 übermittelt werden. Hierzu kann beispielsweise eine kabelgebundene Übertragung oder auch eine drahtlose Übertragung über eine Datenschnittstelle 19 der mobilen Bestrahlungsplattform 100 erfolgen. Die übertragenen Messdaten können beispielsweise für eine Echtzeitüberwachung des Sanierungsvorgangs und/oder zu Zwecken der Dokumentation im Rahmen einer Qualitätssicherung verwendet werden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Mobile Bestrahlungsplattform (100), umfassend:
ein Chassis (11);
ein oder mehrere Bestrahlungseinrichtungen (12), welche in dem Chassis (11) eingebaut sind, zur Abgabe von Strahlungsenergie eingerichtet sind und eine Abstrahlrichtung radial zu einer Längserstreckung der Bestrahlungsplattform (100) aufweisen; und
eine Vielzahl von Stabilisationsauslegern (13), welche an das Chassis (11) angelenkt und dazu ausgelegt sind, das Chassis (11) mittig im Inneren eines Hohlkörpers (1) abzustützen;
**dadurch gekennzeichnet, dass** die mobile Bestrahlungsplattform (100) mindestens einen dielektrischen Sensor (15) umfasst, welcher an einem chassisfernen Ende eines der Vielzahl von Stabilisationsauslegern (13) angebracht und dazu ausgelegt ist, Veränderungen in dielektrischen Eigenschaften in der Umgebung des Stabilisationsauslegers (13) zu erfassen.

2. Mobile Bestrahlungsplattform (100) gemäß Anspruch 1, weiterhin mit:
einem Prozesssteuergerät (17), welches in dem Chassis (11) eingebaut und dazu ausgelegt ist, Betriebsparameter der Bestrahlungsplattform (100) in Abhängigkeit von durch den dielektrischen Sensor (15) erfassten dielektrischen Eigenschaften in der Umgebung des Stabilisationsauslegers (13) dynamisch anzupassen.

3. Mobile Bestrahlungsplattform (100) gemäß einem der Ansprüche 1 und 2, weiterhin mit:
einem Plattformsteuergerät (17), welches in dem Chassis (11) eingebaut und dazu ausgelegt ist, durch den dielektrischen Sensor (15) erfasste Messdaten zu sammeln und auszuwerten.

4. Mobile Bestrahlungsplattform (100) gemäß Anspruch 3, weiterhin mit:
einer Datenschnittstelle (19), welcher mit dem Plattformsteuergerät (17) gekoppelt und dazu ausgelegt ist, durch das Plattformsteuergerät (17) gesammelte Messdaten des dielektrischen Sensors (15) an eine plattformexterne Einrichtung zu übermitteln.

5. Mobile Bestrahlungsplattform (100) gemäß Anspruch 4, wobei die Datenschnittstelle (19) ein Drahtloskommunikationsmodul aufweist.

6. Mobile Bestrahlungsplattform (100) gemäß einem der Ansprüche 1 bis 5, weiterhin mit:
Rollen (14), welche an den chassisfernen Enden der Vielzahl von Stabilisationsauslegern (13) angebracht sind.

7. Mobile Bestrahlungsplattform (100) gemäß einem der Ansprüche 1 bis 6, wobei die ein oder mehreren Bestrahlungseinrichtungen (12) UV-Lichtquellen umfassen.

8. Kanalsanierungssystem, mit:
einem Schlauchliner, dessen Wand durch ein Hohlkörperlaminat (2) mit einer UV-aushärtenden Verbundschicht (3) gebildet wird; und
mindestens einer mobilen Bestrahlungsplattform (100) gemäß Anspruch 7, welche dazu ausgelegt ist, die Verbundschicht (3) des Hohlkörperlaminats (2) des Schlauchliners von innen heraus zu einem eine Innenverkleidung eines zu sanierenden Kanals bildenden Hohlkörper (1) auszuhärten.

9. Verfahren (M) zum Aushärten eines Hohlkörperlaminats (2), umfassend:
Einbringen (M1) einer mobilen Bestrahlungsplattform (100) in das Innere eines Hohlkörperlaminats (2) mit einer unter Strahlungsenergie aushärtenden Verbundschicht (3);
Abstützen (M2) der mobilen Bestrahlungsplattform (100) an der Innenwand des Hohlkörperlaminats (2) über an einem Chassis (11) der Bestrahlungsplattform (100) angelenkten Stabilisierungsausleger (13);
Bestrahlen (M3) des Hohlkörperlaminats (2) mit Strahlungsenergie von in dem Chassis (11) ein ebauten Bestrahlungseinrichtungen (12); **gekennzeichnet durch**
Erfassen (M4) von Veränderungen in dielektrischen Eigenschaften des Hohlkörperlaminats (2) in der Umgebung des Stabilisationsauslegers (13) mittels eines an einem chassisfernen Ende eines der Stabilisationsausleger (13) angebrachten dielektrischen Sensors (15).

10. Verfahren (M) gemäß Anspruch 9, weiterhin mit dem Schritt des dynamischen Anpassens von Betriebsparametern der Bestrahlungsplattform (100) in Abhängigkeit von durch den dielektrischen Sensor (15) erfassten Veränderungen in dielektrischen Eigenschaften des Hohlkörperlaminats (2) in der Umgebung des Stabilisationsauslegers (13).

11. Verfahren (M) gemäß Anspruch 9 oder 10, weiterhin mit dem Schritt des drahtlosen Übermittelns von durch den dielektrischen Sensor (15) erfassten Messdaten über eine Datenschnittstelle (19) der mobilen Bestrahlungsplattform (100) an eine externe Einrichtung außerhalb des Inneren des Hohlkörperlaminats (2).

12. Verfahren (M) gemäß einem der Ansprüche 9 bis 11, wobei die Bestrahlungseinrichtungen (12) UV-Lichtquellen umfassen.

## Claims

1. Mobile irradiation platform (100), comprising:
a chassis (11);
one or more irradiation devices (12) that are integrated in the chassis (11), are configured so as to emit radiation energy, and comprise a radiation direction that is radial with respect to a longitudinal extent of the irradiation platform (100); and
a plurality of stabilization booms (13), which are coupled to the chassis (11) and are designed so as to support the chassis (11) centrally in the interior of a hollow body (1);
**characterised in that** the mobile irradiation platform (100) comprises at least one dielectric sensor (15), which is attached to a chassis-remote end of one of the plurality of stabilisation booms (13) and is configured so as to detect changes in dielectric properties in the vicinity of the stabilisation boom (13).

2. Mobile irradiation platform (100) in accordance with claim 1, further having:
a process control device (17), which is integrated in the chassis (11) and is configured so as to dynamically adjust operating parameters of the irradiation platform (100) in the vicinity of the stabilization boom (13) in dependence upon dielectric properties that are detected by the dielectric sensor (15).

3. Mobile irradiation platform (100) in accordance with one of claims 1 and 2, further having:
a platform control device (17), which is integrated in the chassis (11) and is configured so as to collect and evaluate measurement data that is acquired by means of the dielectric sensor (15).

4. Mobile irradiation platform (100) in accordance with claim 3, further having:
a data interface (19), which is coupled to the platform control device (17) and is configured so as to transmit measurement data of the dielectric sensor (15), which is collected by means of the platform control device (17), to a device that is external to the platform.

5. Mobile irradiation platform (100) in accordance with claim 4, wherein the data interface (19) comprises a wireless communication module.

6. Mobile irradiation platform (100) in accordance with one of claims 1 to 5, further having:
rollers (14), which are attached to the chassis-remote ends of the plurality of stabilization booms (13).

7. Mobile irradiation platform (100) in accordance with one of claims 1 to 6,
wherein the one or more irradiation devices (12) comprise UV light sources.

8. Duct renovation system, having:
a tubular liner, the wall of which is formed by means of a hollow body laminate (2) having a UV-curing composite layer (3); and
at least one mobile irradiation platform (100) in accordance with claim 7, which is configured so as to cure the composite layer (3) of the hollow body laminate (2) of the tubular liner from the inside so as to form a hollow body (1) that forms an inner lining of a duct that is to be renovated.

9. Method (M) for curing a hollow body laminate (2), comprising:
introducing (M1) a mobile irradiation platform (100) into the interior of a hollow body laminate (2) having a composite layer (3) that cures under radiant energy;
supporting (M2) the mobile irradiation platform (100) on the inner wall of the hollow body laminate (2) via stabilization booms (13) that are coupled to a chassis (11) of the irradiation platform (100);
irradiating (M3) the hollow body laminate (2) with radiation energy from irradiation devices (12) that are integrated in the chassis (11); **characterised by**
detecting (M4) changes in dielectric properties of the hollow body laminate (2) in the vicinity of the stabilization boom (13) by means of a dielectric sensor (15) that is attached to a chassis-remote end of one of the stabilization booms (13).

10. Method (M) in accordance with claim 9, further comprising the step of dynamically adjusting operating parameters of the irradiation platform (100) in dependence upon changes in dielectric properties of the hollow body laminate (2) in the vicinity of the stabilization boom (13), which are detected by the dielectric sensor (15).

11. Method (M) in accordance with claim 9 or 10, further having the step of wirelessly transmitting measurement data that is acquired by means of the dielectric sensor (15) via a data interface (19) of the mobile irradiation platform (100) to an external device outside the interior of the hollow body laminate (2).

12. Method (M) in accordance with one of claims 9 to 11, wherein the irradiation devices (12) comprise UV light sources.

## Revendications

1. Plate-forme d'irradiation mobile (100), comprenant :
un châssis (11) ;
un ou plusieurs dispositifs d'irradiation (12) intégrés dans le châssis (11), conçus pour émettre de l'énergie de rayonnement et présentant une direction de rayonnement radiale par rapport à une extension longitudinale de la plate-forme d'irradiation (100) ; et
une pluralité de bras de stabilisation (13) articulés sur le châssis (11) et conçus pour supporter le châssis (11) de manière centrale à l'intérieur d'un corps creux (1) ;
**caractérisée en ce que** la plate-forme d'irradiation mobile (100) comprend au moins un capteur diélectrique (15) fixé à une extrémité éloignée du châssis de l'un de la pluralité de bras de stabilisation (13) et conçu pour détecter des variations de propriétés diélectriques dans l'environnement du bras de stabilisation (13).

2. Plate-forme d'irradiation mobile (100) selon la revendication 1, comprenant en outre :
un dispositif de commande de processus (17) intégré dans le châssis (11) et conçu pour adapter de manière dynamique des paramètres de fonctionnement de la plate-forme d'irradiation (100) en fonction des propriétés diélectriques dans l'environnement du bras de stabilisation (13) détectées par le capteur diélectrique (15).

3. Plate-forme d'irradiation mobile (100) selon l'une des revendications 1 et 2, comprenant en outre :
un dispositif de commande de plate-forme (17) intégré dans le châssis (11) et conçu pour collecter et évaluer les données de mesure acquises par le capteur diélectrique (15).

4. Plate-forme d'irradiation mobile (100) selon la revendication 3, comprenant en outre :
une interface de données (19) couplée au dispositif de commande de plate-forme (17) et conçue pour transmettre les données de mesure du capteur diélectrique (15) collectées par le dispositif de commande de plate-forme (17) à un dispositif externe à la plate-forme.

5. Plate-forme d'irradiation mobile (100) selon la revendication 4, dans laquelle l'interface de données (19) comprend un module de communication sans fil.

6. Plate-forme d'irradiation mobile (100) selon l'une des revendications 1 à 5, comprenant en outre :
des roulettes (14) montées aux extrémités éloignées du châssis de la pluralité de bras de stabilisation (13).

7. Plate-forme d'irradiation mobile (100) selon l'une des revendications 1 à 6, dans laquelle lesdits un ou plusieurs dispositifs d'irradiation (12) comprennent des sources de lumière UV.

8. Système de réhabilitation de canalisations, comprenant :
une gaine tubulaire dont la paroi est formée par un stratifié de corps creux (2) comportant une couche composite (3) durcissant aux UV ; et
au moins une plate-forme d'irradiation mobile (100) selon la revendication 7, conçue pour durcir la couche composite (3) du stratifié de corps creux (2) de la gaine tubulaire depuis l'intérieur afin d'obtenir un corps creux (1) formant un revêtement intérieur d'une canalisation à réhabiliter.

9. Procédé (M) de durcissement d'un stratifié de corps creux (2), comprenant les étapes consistant à :
introduire (M1) une plate-forme d'irradiation mobile (100) à l'intérieur d'un stratifié de corps creux (2) comportant une couche composite (3) durcissant sous l'effet d'une l'énergie de rayonnement ;
soutenir (M2) la plate-forme d'irradiation mobile (100) contre la paroi intérieure du stratifié de corps creux (2) au moyen de bras de stabilisation (13) articulés sur un châssis (11) de la plate-forme d'irradiation (100) ;
irradier (M3) le stratifié de corps creux (2) avec l'énergie de rayonnement de dispositifs d'irradiation (12) intégrés dans le châssis (11) ;
**caractérisé par** l'étape consistant à
détecter (M4) des variations de propriétés diélectriques du stratifié de corps creux (2) dans l'environnement du bras de stabilisation (13) au moyen d'un capteur diélectrique (15) monté sur une extrémité éloignée du châssis de l'un des bras de stabilisation (13).

10. Procédé (M) selon la revendication 9, comprenant en outre l'étape consistant à adapter de manière dynamique des paramètres de fonctionnement de la plate-forme d'irradiation (100) en fonction des variations de propriétés diélectriques du stratifié de corps creux (2) dans l'environnement du bras de stabilisation (13), détectées par le capteur diélectrique (15).

11. Procédé (M) selon la revendication 9 ou 10, comprenant en outre l'étape consistant à transmettre sans fil les données de mesure acquises par le capteur diélectrique (15) à un dispositif externe situé à l'extérieur de l'intérieur du stratifié de corps creux (2) par l'intermédiaire d'une interface de données (19) de la plate-forme d'irradiation mobile (100).

12. Procédé (M) selon l'une des revendications 9 à 11, dans lequel les dispositifs d'irradiation (12) comprennent des sources de lumière UV.
